# EUROPÄISCHE PATENTANMELDUNG

(11) **EP 3 664 258 A1**
(43) Veröffentlichungstag der Anmeldung: **10.06.2020**
(21) Anmeldenummer: 18209993.7
(22) Anmeldetag: 04.12.2018
(51) Int. Cl.: H02K 5/15, H02K 7/14, H02K 11/215, H02K 5/167

(54) **BÜRSTENLOSER ELEKTROMOTOR**

(71) Anmelder: Hilti Aktiengesellschaft, 9494 Schaan (LI)
(72) Erfinder: Schmid, Tobias, 86875 Bronnen/Waal (DE); Burger, Helmut, 86944 Unterdießen (DE); Dietl, Lothar, 86916 Kaufering (DE)
(74) Vertreter: Hilti Aktiengesellschaft Corporate Intellectual Property

(57) **Zusammenfassung**

Bürstenloser Elektromotor für eine elektrische Handwerkzeugmaschine, wobei der Elektromotor ein Lagerschild und eine an dem Lagerschild angeordnete Hall-Platine aufweist, wobei die Hall-Platine mittels eines elastischen O-Rings axial am Lagerschild fixiert ist.

## Beschreibung

### Bürstenloser Elektromotor

Die vorliegende Erfindung betrifft einen bürstenlosen Elektromotor für eine elektrische Handwerkzeugmaschine. Der der Elektromotor weist ein Lagerschild und eine an dem Lagerschild angeordnete Hall-Platine auf.

Bürstenlose Elektromotoren der eingangs genannten Art sind grundsätzlich aus dem Stand der Technik bekannt und kommen beispielsweise in modernen Handwerkzeugmaschinen zum Einsatz. Die Hall-Platine weist typischerweise ein oder mehrere Hall-Sensoren zum Erkennen einer Rotorlage eines Rotors des Elektromotors auf, wodurch eine sensorbasierte elektronische Kommutierung erfolgen kann.

Es ist Aufgabe der vorliegenden Erfindung einen einfach montierbaren/demontierbaren Elektromotor bereitzustellen.

Die Aufgabe wird dadurch gelöst, dass die Hall-Platine mittels eines elastischen O-Rings axial am Lagerschild fixiert ist. Die Erfindung schliesst die Erkenntnis ein, dass Hall-Platinen bei Elektromotoren des Standes der Technik typischerweise mittels Verschrauben oder Heißverstemmen befestigt sind. Im Falle des Verschraubens führt dies zu einem erhöhten Montageaufwand. Durch das Heißverstemmen wird eine zerstörungsfreie Demontage der Hall-Platine verhindert oder zumindest deutlich erschwert.

In Abkehr dazu ist die Hall-Platine bei dem erfindungsmäßen bürstenlosen Elektromotor mittels eines elastischen O-Rings axial am Lagerschild fixiert, sodass zum einen Montageaufwand (bei vergleichsweise kompakter Bauweise) verringert ist und zum anderen - im Sinne einer Funktionsintegration - eine exakte axiale Positionierung der Hall-Platine durch die Spannwirkung des elastischen O-Rings gewährleistet wird. Es hat sich als vorteilhaft herausgestellt, wenn die Hall-Platine ausschließlich mittels des O-Rings axial am Lagerschild fixiert ist.

Vorzugsweise ist das Lagerschild ein B-Lagerschild, d.h. das der Antriebsseite des Elektromotors gegenüberliegende Lagerschild. Die Hall-Platine und der O-Ring sind vorzugsweise auf einer rotorabgewandten Seite des Lagerschilds befindlich. Das Lagerschild kann mit einem Stator des Elektromotors verbunden sein. Das Lagerschild und der Stator können einstückig miteinander ausgebildet sein.

In einer besonders bevorzugten Ausgestaltung weist das Lagerschild ein zentrales Lager zur Aufnahme einer Rotorachse auf. Das zentrale Lager kann über wenigstens einen radialen Haltesteg an dem Lagerschild befestigt sein.

Es hat sich als vorteilhaft herausgestellt, wenn die Hall-Platine in axialer Richtung gegen den wenigstens einen radialen Haltesteg abgestützt ist. An dem zentralen Lager kann wenigstens ein Stützkragen ausgebildet sein, gegen den der O-Ring abgestützt ist. Vorzugsweise sind drei gleichmäßig voneinander beabstandete Stützkragen vorgesehen. Der Stützkragen kann eine Anlagefläche für den O-Ring aufweisen, die schräg zur Rotorachse orientiert ist. Ein zwischen Rotorachse und Flächennormale der Anlagefläche eingeschlossener Winkel kann beispielsweise weniger als 90 Grad, vorzugsweise zwischen 40 und 60 Grad betragen.

In einer weiteren bevorzugten Ausgestaltung ist die Hall-Platine scheibenförmig mit einer konzentrischen hohlzylindrischen Ausnehmung ausgebildet. Vorzugsweise ist ein Innendurchmesser der Ausnehmung größer, als ein Außendurchmesser des zentralen Lagers einschließlich des wenigstens einen Stützkragen. Derart kann die Hall-Platine axial auf das zentrale Lageraufgeschoben und anschließend durch den O-Ring formschlüssig in axialer Richtung gesichert werden.

Die Erfindung wird ebenfalls gelöst durch eine elektrische Handwerkzeugmaschine, vorzugsweise eine akkubetriebene Handwerkzeugmaschine, mit einem Elektromotor nach der vorbeschriebenen Art.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Figur 1: ein erstes bevorzugtes Ausführungsbeispiel eines erfindungsgemäßen bürstenlosen Elektromors mit Blick auf die rotorabgewandte Seite;
- Figur 2: ein Schnitt durch das Lagerschild des Elektromotors der Figur 1; und
- Figur 3: einen rotorseitigen Blick auf das Lagerschild des Elektromotors der Figur 1.

### Ausführunasbeispiel:

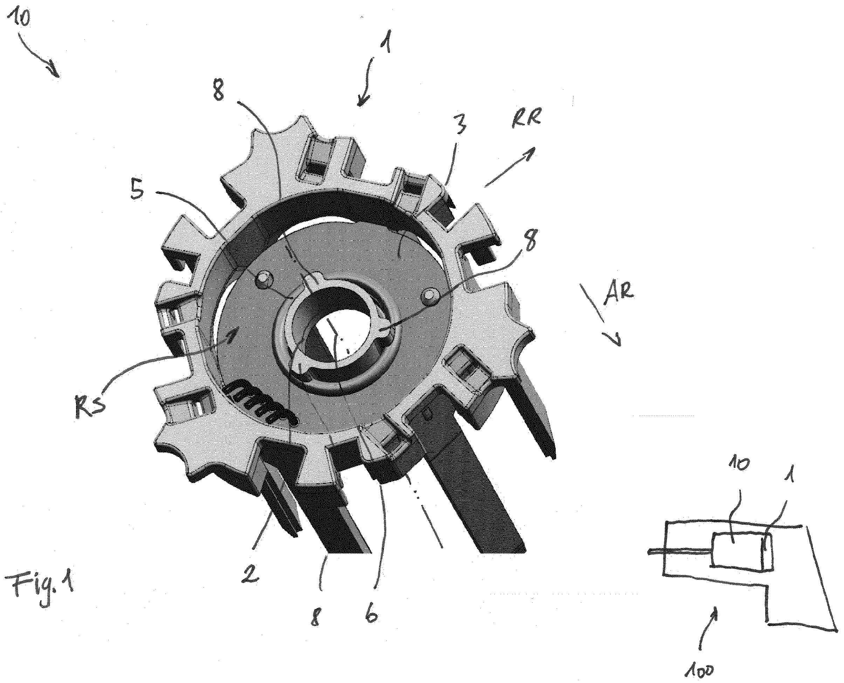

Ein bevorzugtes Ausführungsbeispiel eines erfindungsgemäßen bürstenlosen Elektromotors 10 mit Blick auf die rotorabgewandte Seite RS ist in Figur 1 dargestellt. Der Elektromotor 10 weist ein Lagerschild 1 und eine an dem Lagerschild 1 angeordnete Hall-Platine 3 auf. Im vorliegend dargestellten Ausführungsbeispiel ist das Lagerschild 10 ein B-Lagerschild, d.h. das der Antriebsseite des Elektromotors 10 gegenüberliegende Lagerschild. Aus Gründen der Darstellbarkeit ist der Elektromotor 10 nicht vollständig gezeigt, d.h. insbesondere eine Statorwicklung oder ein Statorpaket (abgesehen von einigen mit dem Lagerschild 1 verbundenen Statorsegmenten) ist in Figur 1 nicht dargestellt.

Erfindungsgemäß ist die Hall-Platine 3 mittels eines elastischen O-Rings 5 axial, d.h. in axialer Richtung AR, am Lagerschild 1 fixiert. Vorliegend ist die Hall-Platine 3 ausschließlich mittels des O-Rings 5 axial am Lagerschild 1 fixiert. Die Hall-Platine 3 und der O-Ring 5 sind beide auf der in Figur 1 gezeigten rotorabgewandten Seite RS des Lagerschilds 1 befindlich.

In Figur 1 ist gut zu erkennen, dass das Lagerschild 1 ein zentrales Lager 2 zur Aufnahme einer Rotorachse 6 aufweist. Ein Rotor des Elektromotors 10 selbst ist aus Gründen der Darstellbarkeit in Figur 1 nicht gezeigt. An dem zentralen Lager 2 sind drei Stützkragen 8 ausgebildet ist, gegen den der O-Ring 5 in axialer Richtung AR abgestützt ist.

Auf der unteren Seite rechts der Figur 1 ist schematisch eine elektrische Handwerkzeugmaschine 100 dargestellt, die mit einem erfindungsgemäßen Elektromotor 10 ausgestattet ist.

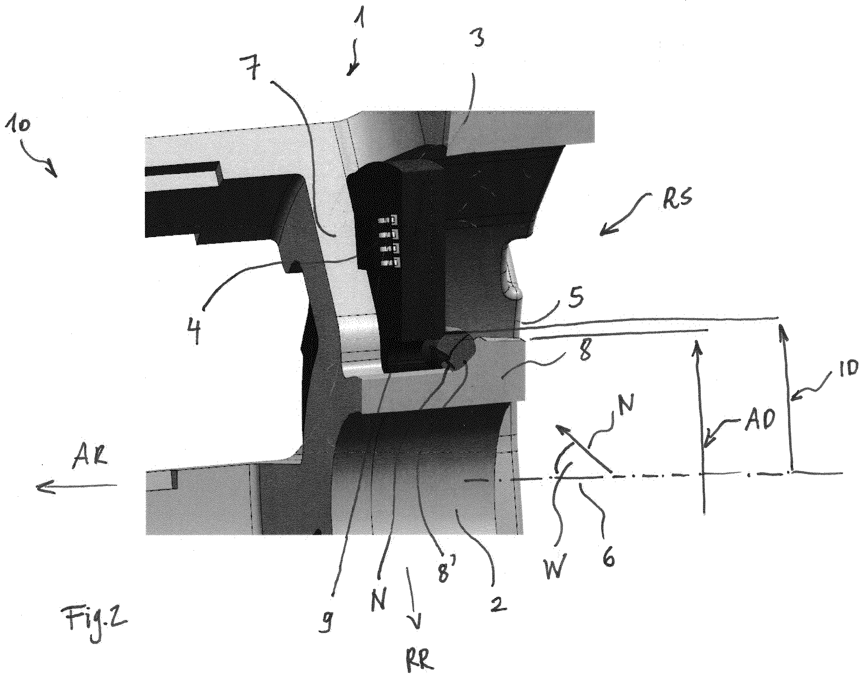

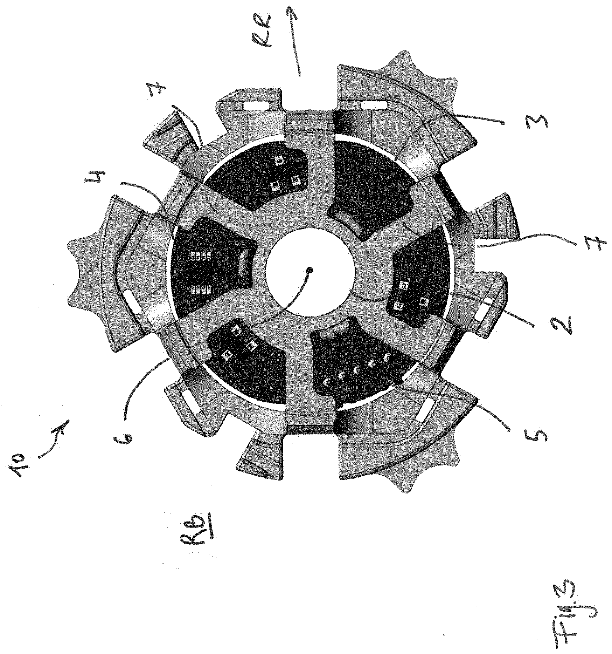

Figur 2 zeigt ein Schnitt durch das Lagerschild 1 des Elektromotors 10 der Figur 1. Gut zu erkennen ist, dass das zentrale Lager 2 über einen radialen Haltesteg 7 an dem Lagerschild 1 befestigt ist (vgl. auf Figur 3). Dabei ist die Hall-Platine 3 einerseits in axialer Richtung AR gegen den radialen Haltesteg 7 abgestützt. Andererseits ist der elastische O-Ring 5 in axialer Richtung AR an dem Stützkragen 8, der an dem zentralen Lager 2 ausgebildet ist, abgestützt. Somit ist die Hall-Platine 3, die hier beispielhaft einen Hallsensor 4 aufweist, mittels des elastischen O-Rings 5 axial am Lagerschild 1 fixiert.

Der Stützkragen 8 weist eine Anlagefläche 8' für den O-Ring 5 auf, die schräg zur Rotorachse 6 orientiert ist. Dabei beträgt ein zwischen Rotorachse 6 und Flächennormale N der Anlagefläche 8' eingeschlossener Winkel W weniger als 90 Grad. Im vorliegend dargestellten Ausführungsbeispiel beträgt der Winkel W etwa 45 was einen guten Kompromiss zwischen Spannwirkung und Montierbarkeit darstellt.

Wie der Figur 2 entnommen werden kann, ist die Hall-Platine 3 scheibenförmig mit einer konzentrischen hohlzylindrischen Ausnehmung 9 ausgebildet ist. Ein Innendurchmesser ID der Ausnehmung 9 ist dabei größer, als ein Außendurchmesser AD des zentralen Lagers 2 einschließlich des Stützkragen 8. Somit kann die Hall-Platine 3 in axialer Richtung AR auf das zentrale Lager 2 aufgeschoben und anschließend durch den O-Ring 5 formschlüssig in axialer Richtung AR gesichert werden. Dabei ist exakte Positionierung der Hall-Platine 5 in axialer Richtung AR durch die Spannwirkung des elastischen O-Rings 5 gewährleistet.

Figur 3 zeigt nun einen rotorseitigen Blick RB auf das Lagerschild des Elektromotors der Figur 1. Gut zu erkennen ist das zentrale Lager 2 und die koaxial zu diesem angeordnete Rotorachse 6. Das zentrale Lager 2 ist im vorliegend dargestellten Ausführungsbeispiel über sechs Haltestege 7, die sich jeweils in radialer Richtung RR erstecken, an dem Lagerschild 1 befestigt.

Wie der Figur 3 entnommen werden kann, ist die scheibenförmige Hall-Platine 3 durch den O-Ring 5, der abschnittsweise durch die Hall-Platine 3 hindurch erkennbar ist, in radialer Richtung RR exakt positioniert. Dies im Sinne einer Funktionsintegration gleichzeitig zu der bereits mit Bezug auf Figur 2 erwähnten exakten Positionierung der Hall-Platine 5 in axialer Richtung AR durch die Spannwirkung des elastischen O-Rings 5.

### Bezugszeichenliste

- 1: Lagerschild
- 2: zentrales Lager
- 3: Hall-Platine
- 4: Hall-Sensor
- 5: O-Ring
- 6: Rotorachse
- 7: radialer Haltesteg
- 8: Stützkragen
- 8': Anlagefläche
- 9: Ausnehmung
- 10: Bürstenloser Elektromotor

- 100: Elektrische Handwerkzeugmaschine

- AD: Außendurchmesser
- AR: Axiale Richtung
- ID: Innendurchmesser
- N: Flächennormale
- RB: Rotorzugewandte Seite
- RR: Radiale Richtung
- RS: Rotorabgewandte Seite
- W: Winkel

## Patentansprüche

1. Bürstenloser Elektromotor (10) für eine elektrische Handwerkzeugmaschine (100), wobei der Elektromotor (10) ein Lagerschild (1) und eine an dem Lagerschild (1) angeordnete Hall-Platine (3) aufweist,
**dadurch gekennzeichnet, dass** die Hall-Platine (3) mittels eines elastischen O-Rings (5) axial am Lagerschild (1) fixiert ist.

2. Elektromotor (10) nach Anspruch 1,
**dadurch gekennzeichnet, dass** die Hall-Platine (3) ausschließlich mittels des O-Rings (5) axial am Lagerschild (1) fixiert ist.

3. Elektromotor (10) nach Anspruch 1 oder 2,
**dadurch gekennzeichnet, dass** das Lagerschild (1) ein zentrales Lager (2) zur Aufnahme einer Rotorachse (6) aufweist.

4. Elektromotor (10) nach Anspruch 3,
**dadurch gekennzeichnet, dass** das zentrale Lager (2) über wenigstens einen radialen Haltesteg (7) an dem Lagerschild (1) befestigt ist.

5. Elektromotor (10) nach Anspruch 4,
**dadurch gekennzeichnet, dass** die Hall-Platine (3) in axialer Richtung (AR) gegen den wenigstens einen radialen Haltesteg (7) abgestützt ist.

6. Elektromotor (10) nach einem der Ansprüche 3 bis 5,
**dadurch gekennzeichnet, dass** an dem zentralen Lager (2) wenigstens ein Stützkragen (8) ausgebildet ist, gegen den der O-Ring (5) abgestützt ist.

7. Elektromotor (10) nach Anspruch 6,
**dadurch gekennzeichnet, dass** der Stützkragen (8) eine Anlagefläche (8') für den O-Ring (5) aufweist, die schräg zur Rotorachse (6) orientiert ist.

8. Elektromotor (10) nach Anspruch 7,
**dadurch gekennzeichnet, dass** ein zwischen Rotorachse (6) und Flächennormale (N) der Anlagefläche (8') eingeschlossener Winkel (W) weniger als 90 Grad, vorzugsweise zwischen 40 und 60 Grad beträgt.

9. Elektromotor (10) nach einem der vorangehenden Ansprüche,
**dadurch gekennzeichnet, dass** die Hall-Platine (3) scheibenförmig mit einer konzentrischen hohlzylindrischen Ausnehmung (9) ausgebildet ist.

10. Elektromotor (10) nach Anspruch,
**dadurch gekennzeichnet, dass** ein Innendurchmesser (ID) der Ausnehmung (9) größer ist, als ein Außendurchmesser (AD) des zentralen Lagers (2) einschließlich des wenigstens einen Stützkragen (8).

11. Elektromotor (10) nach einem der vorangehenden Ansprüche,
**dadurch gekennzeichnet, dass** die Hall-Platine (3) und der O-Ring (5) auf einer rotorabgewandten Seite des Lagerschilds (1) befindlich sind.

12. Elektrische Handwerkzeugmaschine (100) mit einem Elektromotor (10) nach einem der vorangehenden Ansprüche.
